# FASCICULE DE BREVET EUROPEEN

(11) **EP 2 484 568 B1**
(45) Date de publication et mention de la délivrance du brevet: **09.10.2013**
(21) Numéro de dépôt: 12151146.3
(22) Date de dépôt: 13.01.2012
(51) Int. Cl.: B60T 13/74

(54) **Système de freins à maître-cylindre et servofrein électrique**
Bremssystem mit Hauptzylinder und mit einem elektrischen Bremskraftverstärker
Brake system with master cylinder and electric brake booster

(30) Priorité: 02.02.2011 FR 1100329
(43) Date de publication de la demande: 08.08.2012
(73) Titulaire: Robert Bosch GmbH, 70442 Stuttgart (DE)
(72) Inventeur: Cagnac, Bastien, 60660 Cramoisy (FR); Richard, Philippe, 77500 Chelles (FR); Gaffe, François, 44420 La Turballe (FR)

(56) Documents cités:
- WO-A1-2010/006978
- FR-A1- 2 860 474

## Description

### Domaine de l'invention

La présente invention se rapporte à un système de freins à maître-cylindre et servofrein électrique comportant un piston d'actionneur manoeuvré par le servofrein et agissant sur le maître-cylindre par une tige de poussée appuyée sur un disque de réaction également soumis à l'action directe du piston plongeur retenu par une butée arrière dans le piston d'assistance entraîné par le piston d'actionneur, le piston d'assistance étant guidé dans le piston d'actionneur.

### Etat de la technique

De tels systèmes de freins sont connus notamment selon le document FR-A-2860474.

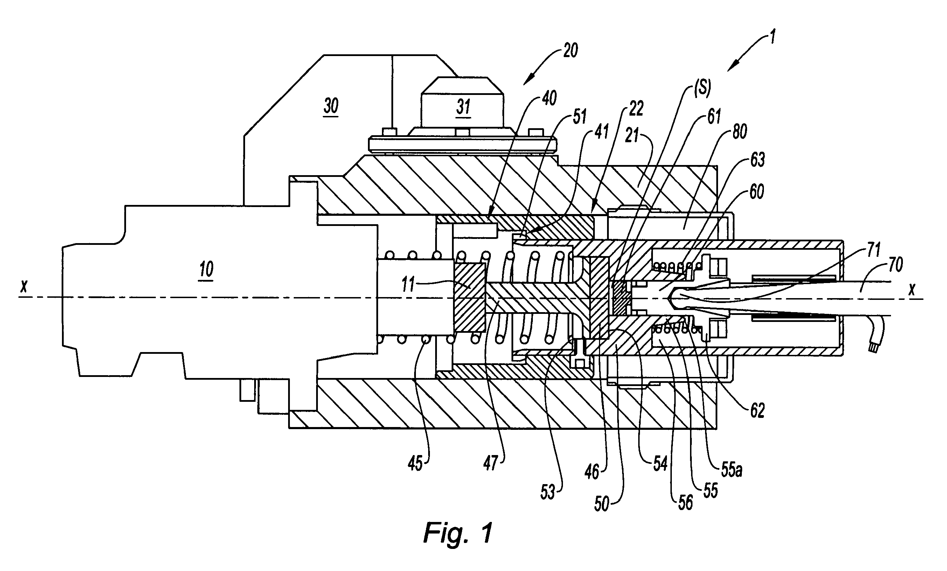

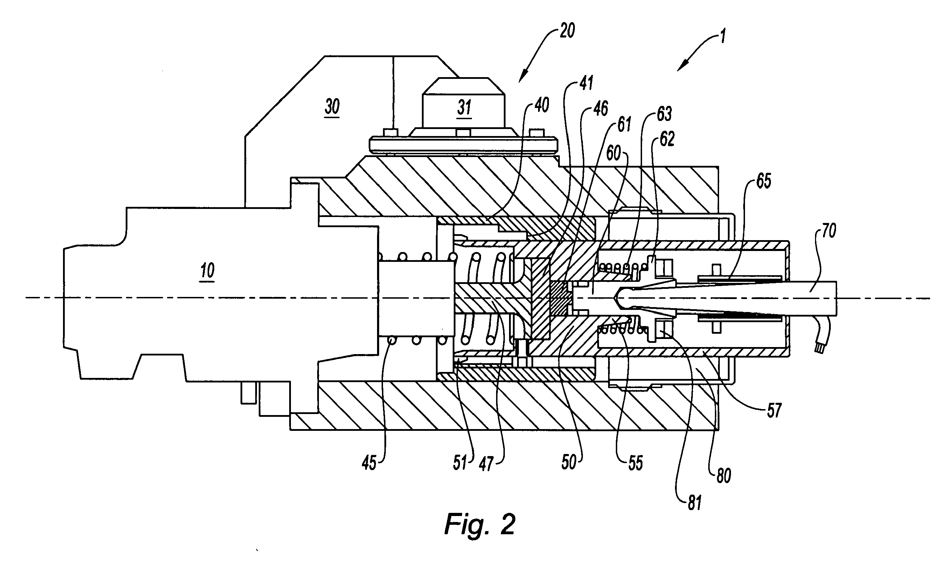

Un système de freins antérieur sera décrit ci-après de manière plus détaillée à l'aide des figures 1 et 2.

La figure 1, montre un système de freins 1 connu à maître-cylindre 10 et servofrein 20, ne laissant apparaître que son piston 11 venant en saillie dans le servofrein 20.Le servofrein 20 se compose d'un boîtier 21 portant un moteur électrique 30 entraînant par une transmission 31 non détaillée, un piston d'actionneur 40 coulissant dans le cylindre 22 du boîtier 21.

Le piston d'actionneur 40 est en forme de manchon muni d'un épaulement intérieur 41.

Le piston d'actionneur 40 constitue un cylindre de guidage recevant le piston d'assistance 50 dont l'extrémité avant est bordée d'une collerette 51 formant une butée périphérique pour la contrebutée constituée par l'épaulement 41. En avançant en direction du maître-cylindre 10, le piston d'actionneur 40 entraîne le piston d'assistance 50 mais inversement, le piston d'assistance 50 peut avancer par rapport au piston d'actionneur 40 indépendamment de ce dernier.

Réciproquement, le mouvement de rappel du piston d'assistance 50 entraîne le piston d'actionneur 40 si la transmission 21 reliant le piston d'actionneur 40 au moteur 30 autorise ce mouvement inverse.

Le piston d'assistance 50 a intérieurement un premier épaulement 53 servant d'appui à un ressort de rappel 45 par ailleurs appuyé contre l'extrémité du boîtier du maître-cylindre 10. La cavité se prolonge par un logement 54 formant un épaulement recevant le disque de réaction 46 contre lequel s'appuie la tige de poussée 47 qui passe librement à l'intérieur du ressort de rappel 45.

Le logement 54 du disque de réaction 46 dans le piston d'assistance 50 est ouvert vers l'arrière autour de l'axe XX et se prolonge par un manchon de guidage 55 pour recevoir un piston intermédiaire 61 susceptible de s'appuyer contre le dos du disque de réaction 46 ; un orifice permet le passage du piston plongeur 60 ou de son prolongement, c'est-à-dire le piston intermédiaire 61.

Le piston plongeur 60 guidé dans le manchon de guidage 55 du piston d'assistance 50 est muni à l'arrière, d'une collerette 62 contre laquelle s'appuie le ressort de rappel 63 du piston plongeur 60 ; le ressort de rappel 63 s'appuie au fond de la gorge 56 du piston d'assistance 50. Le bord arrière 55a du manchon de guidage 55 forme une butée pour la collerette 62 du piston plongeur 60 lorsque celui-ci avance et que le servofrein ne fonctionne pas. Le piston plongeur 60 reçoit la tige de commande 70 par ailleurs reliée à la pédale de frein.

La figure 1 montre le mode de fonctionnement normal du servofrein. Le piston d'actionneur 40 entraîne par son épaulement intérieur 41 le piston d'assistance 50 par sa collerette de butée 51. Cet entraînement est transmis par le disque de réaction 46 immédiatement à la tige de poussée 47 qui déplace le piston 11 du maître-cylindre 10 et commande la pression de freinage dans les circuits de frein.

Pendant ce fonctionnement normal, il subsiste un intervalle (saut S) entre le dos du disque de réaction 46 et la face avant du piston intermédiaire 61 puisque, par principe, en cas de fonctionnement normal du servofrein 20, il n'y a pas d'action directe de la commande par la pédale de frein sur le maître-cylindre 10.

La figure 2 montre le fonctionnement de secours imposé par la réglementation. On suppose pour cela que le moteur 30 du servofrein 20 est défaillant de sorte que même si la poussée exercée sur la tige de commande 70 est détectée. Cette détection ne produit aucun entraînement du piston d'actionneur 40. Lorsque le seuil de poussée (saut) est dépassé, le piston plongeur 60 s'appuie contre le dos du disque de réaction 46 par le piston intermédiaire 61. La poussée exercée sur la pédale de frein est ainsi transmise directement par la tige de commande 70 et le piston intermédiaire 61, au dos du disque de réaction 46 qui lui-même pousse la tige de poussée 47 sans l'assistance du servofrein. Après une certaine course, la partie intérieure de la collerette 62 vient en appui contre le bord arrière 55a du manchon de guidage 55 et le pousse directement pour déplacer la tige de poussée 47.

Mais cette poussée pour faire monter la pression dans le maître-cylindre de frein et actionner ainsi les freins doit vaincre la poussée cumulée des deux ressorts de rappel 45 et 63.

### But de l'invention

La présente invention a pour but de développer un système de freins du type défini ci-dessus permettant de simplifier la construction du servofrein électrique, d'en réduire l'encombrement, d'en augmenter l'efficacité en défaillance et d'en réduire le coût.

### Exposé et avantages de l'invention

A cet effet, la présente invention concerne un système de freins défini ci-dessus caractérisée en ce que,
- le piston d'actionneur comporte un épaulement d'appui pour un ressort de rappel dont l'autre extrémité est appuyée contre le boîtier du maître-cylindre et qui agit dans le sens du retour du piston d'actionneur,
- le boîtier du servofrein comporte un organe de retenue formant une butée arrière pour le piston d'actionneur.
- le piston d'assistance comporte un épaulement arrière formant une butée et le piston d'actionneur comporte une collerette de butée derrière l'épaulement du piston d'assistance et formant une butée d'entraînement unidirectionnel du piston d'assistance par le piston d'actionneur, dans le sens de l'actionnement du maître-cylindre,
- le piston d'assistance étant libre d'avancer par rapport au piston d'actionneur sous la poussée de la tige de commande pour actionner le piston du maître-cylindre en cas de défaillance du servofrein électrique.

Ce système de freins a l'avantage de présenter une structure plus simple que celle du système de freins de l'état de la technique, d'en réduire la taille et d'offrir une plus grande efficacité en défaillance puisque la poussée exercée sur la tige de commande n'aura à vaincre que les efforts antagonistes exercés par le liquide de frein dans le maître-cylindre de frein sur le ou les pistons du maître-cylindre et l'effort développé par le ressort de rappel du piston d'actionneur.

Suivant une autre caractéristique de l'invention un ressort de rappel est installé entre la collerette de butée du piston d'actionneur et la collerette du piston plongeur pour repousser le piston plongeur par rapport au piston d'actionneur.

Suivant une caractéristique, le piston d'actionneur comporte une butée d'avancée pour être rencontrée par le piston d'assistance à la fin de la course de commande du maître-cylindre en défaillance du servofrein électrique. Cette limitation de la course de commande évite la destruction du ressort de rappel du piston plongeur, s'appuyant sur la collerette de butée du piston d'actionneur. En effet, pendant que le piston d'assistance avance indépendamment du piston d'actionneur, le piston d'assistance étant poussé par la tige de commande, le piston d'actionneur étant bloqué dans sa position par exemple contre la butée arrière correspondant à sa position de repos.

Suivant une autre caractéristique avantageuse de l'invention, le piston d'assistance comporte un manchon communiquant avec le logement du disque de réaction dans le piston d'assistance.

Cette forme de réalisation a l'avantage non seulement de rendre l'ensemble compact mais aussi former une butée contre laquelle peut s'appuyer le piston plongeur en fonctionnement de secours car suivant une autre caractéristique avantageuse de l'invention le manchon forme par son bord arrière une butée contre laquelle peut s'appuyer la collerette du piston plongeur en cas d'actionnement sur la tige de commande si le servofrein est défaillant.

Suivant une autre caractéristique avantageuse de l'invention, le piston d'assistance est relié au piston d'actionneur par un ergot en saillie, coulissant dans une rainure du piston d'actionneur ou réciproquement pour solidariser en rotation les deux pistons et les laisser libres en translation.

### Dessins

La présente invention sera décrite ci-après de manière plus détaillée à l'aide d'un exemple de réalisation d'un système de freins antérieur et un système de frein selon l'invention représentés par leur ensemble maître-cylindre / servofrein dans les dessins annexés dans lesquels :
- la figure 1 montre le système de freins antérieur en position de fonctionnement normal,
- la figure 2 montre l'ensemble de la figure 1 en position de fonctionnement de secours.
- la figure 3 montre le système de freins selon l'invention en position de fonctionnement normal,
- la figure 4 montre l'ensemble de la figure 3 en position de fonctionnement de secours.

### Description d'un mode de réalisation de l'invention

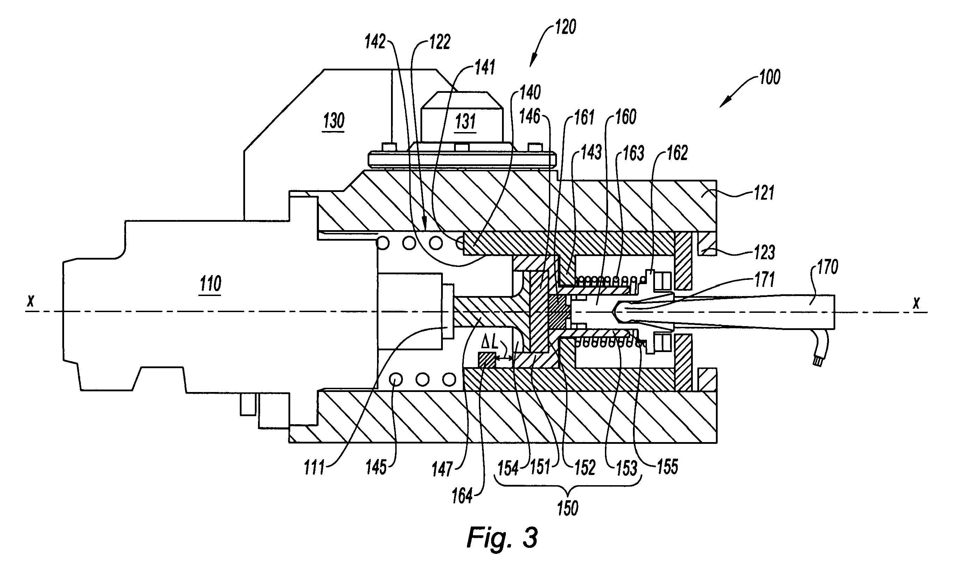

Selon la figure 3, l'invention se rapporte à un système de freins 100 à maître-cylindre 110 et servofrein électrique 120. Le maître-cylindre 110 est de préférence, un maître-cylindre tandem, simplement esquissé par son contour et ne laissant apparaître que son piston 111 (piston primaire) dépassant du boîtier et venant en saillie dans le servofrein 120.

Le servofrein 120 se compose d'un boîtier 121 portant un moteur électrique 130 entraînant par une transmission 131 non détaillée, un piston d'actionneur 140 coulissant dans le cylindre 122 du boîtier 121. Le type de transmission 131, est, par exemple, une transmission à vis ou une transmission à crémaillère double ou simple.

Le piston d'actionneur 140 est en forme de manchon muni d'un épaulement avant 141 servant d'appui à un ressort de rappel 145 par ailleurs appuyé contre l'extrémité du boîtier du maître-cylindre 110 en entourant le piston primaire 111 ; le piston d'actionneur 140 constitue un cylindre de guidage 142 recevant le piston d'assistance 150. Le piston d'actionneur 140 est muni d'une collerette intérieure 143 située derrière sa partie avant recevant la partie du piston d'assistance 150 logeant le disque de réaction 146 et la tête de la tige de poussée 147.

Le piston d'assistance 150 se compose d'une jupe cylindrique avant 151 reliée par un épaulement 152, côté arrière, à un manchon 153. L'épaulement 152 forme sur le côté avant, un logement 154 pour le disque de réaction 146 et la tête de la tige de poussée 147.

La collerette 143 forme une butée périphérique pour la contrebutée constituée par l'épaulement 151 du piston d'assistance 150. Ainsi, en avançant en direction du maître-cylindre 110, le piston d'actionneur 140 entraîne le piston d'assistance 150 mais inversement, le piston d'assistance 150 peut avancer par rapport au piston d'actionneur 140 indépendamment de ce dernier.

Le mouvement de rappel du piston d'actionneur 140 si la transmission 131 reliant le piston d'actionneur 140 au moteur 130 autorise ce mouvement inverse, par le ressort de rappel 145, fait reculer le piston plongeur 160 et permet ainsi au piston d'assistance 150 de reculer, poussé par le piston primaire 111.

Le logement 154 du disque de réaction 146 dans le piston d'assistance 150 est ouvert vers l'arrière autour de l'axe XX et se prolonge par le manchon de guidage 153 pour recevoir un piston intermédiaire 161 susceptible de s'appuyer contre le dos du disque de réaction 146 ; un orifice permet le passage du piston plongeur 160 ou de son prolongement, c'est-à-dire le piston intermédiaire 161.

Le piston plongeur 160 guidé dans le manchon de guidage 153 du piston d'assistance 150 est muni à l'arrière, d'une collerette 162 contre laquelle s'appuie le ressort de rappel 163 du piston plongeur 160 ; le ressort de rappel 163 entoure le manchon 153 et s'appuie contre le coté arrière de la collerette 143 du piston d'actionneur 140. Le bord arrière 155 du manchon de guidage 153 forme une butée pour la collerette 162 du piston plongeur 160 lorsque celui-ci avance et que le servofrein ne fonctionne pas. Le piston plongeur 160 reçoit la tête 171 en forme de rotule de l'extrémité de la tige de commande 170 par ailleurs reliée à la pédale de frein. Le piston plongeur 160 est retenu dans le piston d'assistance 150 par des moyens non représentés.

La course d'avancée du piston d'assistance 150 par rapport au piston d'actionnement 140 est limitée à une course ΔL définie par la course que le piston primaire 111 du maître-cylindre 110 doit effectuer pour générer dans le circuit de frein, la pression de secours imposée par la réglementation tout en protégeant le ressort de rappel 163 du piston plongeur 160. Selon l'exemple représenté, le mouvement d'avancée du piston d'assistance 150 par rapport au piston d'actionneur 140 est limité par une butée 164 portée par le piston d'actionneur 140 et que rencontre le bord avant de la jupe 151 du piston d'assistance 150. Cette course ΔL est celle que peut effectuer librement le piston d'assistance 150 entre sa position en appui arrière contre la collerette 143 du piston 140 et sa position avancée jusqu'à la butée 164.

La figure 3 montre le mode de fonctionnement normal du servofrein. Le piston d'actionneur 140 entraîne par sa collerette 143 le piston d'assistance 150 par l'intermédiaire de son épaulement de butée 152. Cet entraînement est transmis par le disque de réaction 146 immédiatement à la tige de poussée 147 qui déplace le piston 111 du maître-cylindre 110 et commande la pression de freinage dans les circuits de frein.

Lorsque la poussée est relâchée sur la tige de commande 170, ce relâchement est détecté par un capteur différentiel de course qui commande l'arrêt du moteur électrique 130 ou, le cas échéant, son inversion pour permettre le retour du piston d'actionneur 140 et, par suite, le retour du piston plongeur 160 rappelé par le ressort 163.

Pendant ce fonctionnement normal, il subsiste un intervalle (saut S) entre le dos du disque de réaction 146 et la face avant du piston intermédiaire 161 puisque, par principe, en cas de fonctionnement normal du servofrein 120, il n'y a pas d'action directe de la tige de commande 170 sur le maître-cylindre 110.

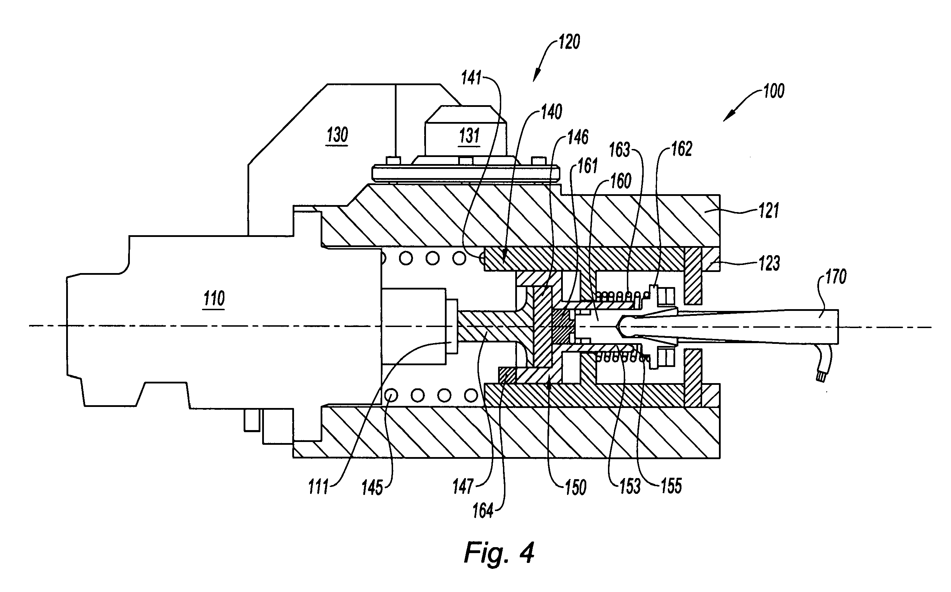

La figure 4 montre le fonctionnement en défaillance d'assistance. On suppose pour cela que le moteur 130 du servofrein 120 est défaillant de sorte que même si la poussée exercée sur la tige de commande 170 est détectée par le capteur différentiel de course, cette détection ne produit aucun entraînement du piston d'actionneur 140. Or la réglementation impose de pouvoir en cas de défaillance créer une certaine pression dans le circuit de frein par l'intermédiaire du maître-cylindre 110 pour actionner les freins. Cette pression doit pouvoir être générée par la commande directe du piston 111 du maître-cylindre par une transmission mécanique entre la tige de commande 170 et le piston 111. Ainsi, la tige de commande 170 avec le piston plongeur 160 et le piston intermédiaire 161, avance et lorsque le seuil de poussée (saut) est dépassé, le piston plongeur 160 s'appuie contre le dos du disque de réaction 146 par le piston intermédiaire 161. La poussée exercée sur la pédale de frein est ainsi transmise directement par la tige de commande 170 et le piston intermédiaire 161, au dos du disque de réaction 146 qui lui-même pousse la tige de poussée 147 sans l'assistance du servofrein. Après une certaine course, la partie intérieure de la collerette 162 vient en appui contre le bord arrière 155 du manchon de guidage 153 et le pousse directement pour déplacer la tige de poussée 147.

Le piston d'assistance 150 avance ainsi alors que le piston d'actionneur 140 est immobilisé par son ressort 145 contre la butée arrière 123 jusqu'à ce que le piston d'assistance 150 rencontre la butée d'avancée 164 après avoir parcouru la course ΔL.

Par conception à ce moment, la pression réglementaire est atteinte dans le maître-cylindre 110 et dans les circuits de freins par le déplacement du piston 111 de cette distance AL.

La course d'avancée de la tige de poussée 147 peut continuer mais l'effort à transmettre à la tige de commande 170 par l'action sur la pédale de frein, dépendra alors non seulement de la pression engendrée dans le maître-cylindre 110, mais également de la poussée antagoniste exercée à partir de ce moment par le ressort 145.

### NOMENCLATURE

- 1: système de freins
- 10: maître-cylindre
- 11: piston primaire
- 20: servofrein
- 21: boîtier du servofrein
- 22: cylindre du boîtier 21
- 30: moteur électrique
- 31: transmission
- 40: piston d'actionneur
- 41: épaulement intérieur/contre butée
- 45: ressort de rappel
- 46: disque de réaction
- 47: tige de poussée
- 50: piston d'assistance
- 51: collerette de butée
- 53: épaulement
- 54: logement
- 55: manchon de guidage
- 55a: extrémité du manchon formant une butée
- 56: gorge
- 60: piston plongeur
- 61: piston intermédiaire
- 62: collerette
- 63: ressort de rappel
- 70: tige de commande
- 71: tête
- 80: manchon extérieur
- 100: système de freins
- 110: maître-cylindre
- 111: piston primaire
- 120: servofrein
- 121: boîtier du servofrein
- 122: cylindre du boîtier
- 123: butée arrière
- 130: moteur électrique
- 131: transmission
- 140: piston d'actionneur
- 141: épaulement avant
- 142: cylindre de guidage
- 143: collerette de butée
- 145: ressort de rappel
- 146: disque de réaction
- 147: tige de poussée
- 150: piston d'assistance
- 151: jupe cylindrique avant
- 152: épaulement
- 153: manchon de guidage
- 154: logement
- 155: bord arrière du manchon
- 156: gorge
- 160: piston plongeur
- 161: piston intermédiaire
- 162: collerette
- 163: ressort de rappel
- 164: butée d'avancée
- 170: tige de commande
- 171: tête

## Revendications

1. Système de freins à maître-cylindre et servofrein électrique comportant un piston d'actionneur (140) manoeuvré par le servofrein et agissant sur le maître-cylindre par une tige de poussée (147) appuyée sur un disque de réaction soumis à l'action directe d'un piston plongeur (160) et entraîné par un piston d'assistance (150) guidé dans le piston d'actionneur (140), et entraîné par celui-ci, le piston d'assistance (150) étant libre d'avancer par rapport au piston d'actionneur (140) sous la poussée de la tige de commande (170) pour actionner le piston (111) du maître-cylindre (110) en cas de défaillance du servofrein électrique (120) **caractérisé en ce qu'**un premier ressort de rappel (145) est prévu, et **en ce que**
- le piston d'actionneur (140) comporte un épaulement d'appui (141) pour le premier ressort de rappel (145) dont l'autre extrémité est appuyée contre le boîtier du maître-cylindre (110) et qui agit dans le sens du retour du piston d'actionneur (140),
- le boîtier (121) du servofrein (120) comporte un organe de retenue (123) formant une butée arrière pour le piston d'actionneur (140).
- le piston d'assistance (150) comporte un épaulement arrière (151) formant une butée et le piston d'actionneur (140) comporte une collerette de butée (143) derrière l'épaulement du piston d'assistance (150) et formant une butée d'entraînement unidirectionnel du piston d'assistance (150) par le piston d'actionneur (140), dans le sens de l'actionnement du maître-cylindre.

2. Système de freins selon la revendication 1,
**caractérisé en ce qu'**
un deuxième ressort de rappel (163) est installé entre la collerette de butée (143) du piston d'actionneur (140) et la collerette (162) du piston plongeur (160) pour repousser le piston plongeur (160) par rapport au piston d'actionneur (140).

3. Système de freins selon la revendication 2,
**caractérisé en ce que**
le piston d'actionneur (140) comporte une butée d'avancée (164) pour être rencontrée par le piston d'assistance (150) à la fin de la course de commande (ΔL) du maître-cylindre (110) en cas de défaillance du servofrein électrique (120).

4. Système de freins selon la revendication 1,
**caractérisé en ce que**
le piston d'assistance (150) comporte un manchon (153) communiquant avec le logement (154) du disque de réaction (146) dans le piston d'assistance (150).

5. Système de freins selon la revendication 4,
**caractérisé en ce que**
le manchon (153) forme par son bord arrière (155) une butée contre laquelle peut s'appuyer la collerette (162) du piston plongeur (160) en cas d'actionnement sur la tige de commande (170) si le servofrein (120) est défaillant.

6. Système de freins selon la revendication 1,
**caractérisé en ce que**
le piston d'assistance (150) est relié au piston d'actionneur (140) par un ergot en saillie, coulissant dans une rainure du piston d'actionneur (140) ou réciproquement pour solidariser en rotation les deux pistons (140, 150) et les laisser libres en translation.

## Patentansprüche

1. Bremssystem mit Hauptzylinder und elektrischem Bremskraftverstärker, das einen Stellgliedkolben (140) aufweist, der vom Bremskraftverstärker betätigt wird und durch eine Schubstange (147) auf den Hauptzylinder einwirkt, die auf einer Reaktionsscheibe aufliegt, welche der direkten Wirkung eines Tauchkolbens (160) ausgesetzt ist und von einem Hilfskolben (150) angetrieben wird, der im Stellgliedkolben (140) geführt und von diesem angetrieben wird, wobei der Hilfskolben (150) sich unter dem Schub der Steuerstange (170) bezüglich des Stellgliedkolbens (140) frei vorwärts bewegen kann, um bei Ausfall des elektrischen Bremskraftverstärkers (120) den Kolben (111) des Hauptzylinders (110) zu betätigen,
**dadurch gekennzeichnet, dass** eine erste Rückstellfeder (145) vorgesehen ist, und dass
- der Stellgliedkolben (140) eine Anlageschulter (141) für die erste Rückstellfeder (145) aufweist, deren anderes Ende gegen das Gehäuse des Hauptzylinders (110) anliegt und die in Richtung der Rückkehr des Stellgliedkolbens (140) wirkt,
- das Gehäuse (121) des Bremskraftverstärkers (120) ein Rückhalteelement (123) aufweist, das einen hinteren Anschlag für den Stellgliedkolben (140) formt,
- der Hilfskolben (150) eine einen Anschlag formende hintere Schulter (151) aufweist, und der Stellgliedkolben (140) einen Anschlagkragen (143) hinter der Schulter des Hilfskolbens (150) aufweist, der einen Einweg-Antriebsanschlag des Hilfskolbens (150) durch den Stellgliedkolben (140) in Richtung der Betätigung des Hauptzylinders formt.

2. Bremssystem nach Anspruch 1, **dadurch gekennzeichnet, dass** eine zweite Rückstellfeder (163) zwischen dem Anschlagkragen (143) des Stellgliedkolbens (140) und dem Kragen (162) des Tauchkolbens (160) eingebaut ist, um den Tauchkolben (160) bezüglich des Stellgliedkolbens (140) zurückzudrücken.

3. Bremssystem nach Anspruch 2, **dadurch gekennzeichnet, dass** der Stellgliedkolben (140) einen Vorschubanschlag (164) aufweist, auf den der Hilfskolben (150) bei Ausfall des elektrischen Bremskraftverstärkers (120) am Ende des Steuerhubs (ΔL) des Hauptzylinders (110) treffen soll.

4. Bremssystem nach Anspruch 1, **dadurch gekennzeichnet, dass** der Hilfskolben (150) eine Muffe (153) aufweist, die mit der Aufnahme (154) der Reaktionsscheibe (146) im Hilfskolben (150) in Verbindung steht.

5. Bremssystem nach Anspruch 4, **dadurch gekennzeichnet, dass** die Muffe (153) durch ihren hinteren Rand (155) einen Anschlag formt, gegen den der Kragen (162) des Tauchkolbens (160) sich bei der Betätigung der Steuerstange (170) auflegen kann, wenn der Bremskraftverstärker (120) ausgefallen ist.

6. Bremssystem nach Anspruch 1, **dadurch gekennzeichnet, dass** der Hilfskolben (150) mit dem Stellgliedkolben (140) über einen vorstehenden Zapfen verbunden ist, der in einer Rille des Stellgliedkolbens (140) oder reziprok gleitet, um die zwei Kolben (140, 150) in Drehung fest zu verbinden und sie in Translation frei beweglich zu lassen.

## Claims

1. Brake system with master cylinder and electric brake booster, comprising an actuator piston (140) operated by the brake booster and acting on the master cylinder via a push rod (147) pressed against a reaction disc acted on directly by a plunger piston (160) and driven by a secondary piston (150) guided in the actuator piston (140), and driven thereby, the secondary piston (150) being free to advance relative to the actuator piston (140) under the thrust of the control rod (170) so as to actuate the piston (111) of the master cylinder (110) in case of failure of the electric brake booster (120),
**characterized in that**
a first return spring (145) is provided, and **in that**
- the actuator piston (140) comprises a support shoulder (141) for the first return spring (145), of which the other end is pressed against the casing of the master cylinder (110) and which acts in the return direction of the actuator piston (140),
- the casing (121) of the brake booster (120) comprises a retaining member (123) forming a rear stop for the actuator piston (140),
- the secondary piston (150) comprises a rear shoulder (151) forming a stop and the actuator piston (140) comprises a stop collar (143) behind the shoulder of the secondary piston (150) and forming a stop for unidirectional driving of the secondary piston (150) by the actuator piston (140) in the direction of actuation of the master cylinder.

2. Brake system according to Claim 1,
**characterized in that**
a second return spring (163) is installed between the stop collar (143) of the actuator piston (140) and the collar (162) of the plunger piston (160) to push back the plunger piston (160) relative to the actuator piston (140).

3. Brake system according to Claim 2,
**characterized in that**
the actuator piston (140) comprises an advance stop (164) to be contacted by the secondary piston (150) at the end of the control path (ΔL) of the master cylinder (110) in case of failure of the electric brake booster (120).

4. Brake system according to Claim 1,
**characterized in that**
the secondary piston (150) comprises a sleeve (153) communicating with the housing (154) of the reaction disc (146) in the secondary piston (150).

5. Brake system according to Claim 4,
**characterized in that**
the sleeve (153) forms, via its rear edge (155), a stop against which the collar (162) of the plunger piston (160) may press in case of actuation on the control rod (170) if the brake booster (120) is faulty.

6. Brake system according to Claim 1,
**characterized in that**
the secondary piston (150) is connected to the actuator piston (140) via a protruding lug, sliding in a groove in the actuator piston (140) or vice versa so as to unify the rotation of the two pistons (140, 150) and allow them to move freely in translation.
